# EUROPÄISCHE PATENTANMELDUNG

(11) **EP 1 122 642 A1**
(43) Veröffentlichungstag der Anmeldung: **08.08.2001**
(21) Anmeldenummer: 99106818.0
(22) Anmeldetag: 06.04.1999
(51) Int. Cl.: G06F 9/44

(54) **Softwarekomponente für ein Automatisierungsprogramm mit Mehrfachnutzung für verschiedene Programmierwerkzeuge**

(71) Anmelder: SIEMENS AKTIENGESELLSCHAFT, 80333 München (DE)
(72) Erfinder: Haardörfer, Jürgen, 90574 Rosstal (DE); Jachmann, Thomas, 90475 Nürnberg (DE); Winter, Ulrich, 91790 Burgsalach (DE)

(57) **Zusammenfassung**

Die Erfindung betrifft eine Softwarekomponente (SW) für ein Automatisierungsprogramm (ASP) mit einem Softwareobjekt (SO) zur Bearbeitung von der Softwarekomponente (SW) zugeordneten Funktionsregeln (Fi) mit insbesondere mehreren Darstellungsarten (DAi) zur graphischen Darstellung der in der Softwarekomponente (SW) enthaltenen Funktionsregeln (Fi).

## Beschreibung

Die Erfindung betrifft eine Softwarekomponente für ein Automatisierungsprogramm, ein System und ein Verfahren zur Erstellung, Steuerung und/oder Überwachung eines technischen Prozesses mit mindestens einer Softwarekomponente.

Eine derartige Softwarekomponente kommt insbesondere bei einem Automatisierungssystem zur Steuerung und/oder Überwachung eines technischen Prozesses zur Anwendung. Dabei wird beispielsweise festgelegt, wie Meßgrößen des Prozesses auf Stellgrößen des Prozesses einwirken. Für die Erstellung, Bearbeitung, Analyse und Anzeige eines derartigen Automatisierungsprogramms kommen Programmierwerkzeuge zum Einsatz, die auf einer Datenverarbeitungsvorrichtung ablauffähig sind und in der Lage sind, das Automatisierungsprogramm, bzw. einen Teil eines Automatisierungsprogramms graphisch anzuzeigen. Hierzu sind verschiedene Darstellungsarten für das Automatisierungsprogramm möglich, beispielsweise Struktogramme, Zustandsautomaten, Stromlaufpläne, Funktionspläne etc. Manche Automatisierungsprogramme sind in der Lage auf verschiedene Arten dargestellt zu werden, beispielsweise als Struktogramm oder als Programm-Ablaufplan, als Stromlaufplan oder als Funktionsplan.

Der Erfindung liegt die Aufgabe zugrunde, eine Softwarekomponente für ein Automatisierungsprogramm, ein System und ein Verfahren zur Erstellung, Steuerung und/oder Überwachung eines technischen Prozesses mit mindestens einer Softwarekomponente anzugeben, die bzw. das bei einem geringen Erstellungsaufwand der Softwarekomponente universell und transparent in verschiedenen Programmierwerkzeugen einsetzbar ist.

Diese Aufgabe wird durch eine Softwarekomponente für ein Automatisierungsprogramm gelöst, mit mindestens einem Softwareobjekt zur Bearbeitung von der Softwarekomponente zugeordneten Funktionsregeln und mit insbesondere mehreren Darstellungsarten zur graphischen Darstellung der Softwarekomponente(n) in verschiedenen Programmierwerkzeugen, wobei Darstellungsarten in der Softwarekomponente gekapselt sind und wobei die Softwarekomponente Mittel zur Auswahl einer der Funktionsregeln der Softwarekomponente aufweist.

Diese Aufgabe wird durch ein System zur Erstellung, Steuerung und/oder Überwachung eines technischen Prozesses mit mindestens einer Softwarekomponente gelöst, die mindestens ein Softwareobjekt zur Bearbeitung von der Softwarekomponente zugeordneten Funktionsregeln und insbesondere mehrere Darstellungsarten zur graphischen Darstellung der Softwarekomponente in verschiedenen Programmierwerkzeugen aufweist, wobei die Softwarekomponente Mittel zur Kapselung der graphischen Darstellungsarten aufweist.

Diese Aufgabe wird durch ein Verfahren zur Erstellung, Steuerung und/oder Überwachung eines technischen Prozesses gelöst, bei dem einer Softwarekomponente des technischen Prozesses Funktionsregeln zugeordnet sind, bei dem der Softwarekomponente Darstellungsarten zur graphischen Darstellung der Softwarekomponente in verschiedenen Programmierwerkzeugen zugeordnet sind, bei dem die Darstellungsarten mit den zugeordneten Funktionsregeln jeweils unabhängig von den Programmierwerkzeugen wirksam ist.

Der Erfindung liegt die Erkenntnis zugrunde, daß Softwarekomponenten für Automatisierungsprogramme innerhalb der jeweils verwendeten Programmierwerkzeuge jeweils separat realisiert werden mußten. Dies erforderte zum einen die Realisierung eines Softwareobjekts, das die zugeordneten Funktionsregeln enthalten mußte, sowie die Realisierung einer Darstellungsart zur graphischen Darstellung einer Softwarekomponente. Ein Wechseln der Darstellungsart, d.h. ein Wechseln von Programmierwerkzeugen war hierdurch somit nicht bzw. nur eingeschränkt möglich. Bei der erfindungsgemäßen Softwarekomponente hingegen sind die Funktionsregeln und Darstellungsarten für die Softwarekomponente in einem gemeinsamen Softwareobjekt realisiert. Hierdurch ergibt sich ein geringerer Realisierungsaufwand für die Softwarekomponente und das Programmierwerkzeug, da es zum einen nur eine Funktionskomponente in Form des Softwareobjekts gibt, und zum anderen die Darstellungsarten unabhängig vom Programmierwerkzeug realisiert werden, wobei sie allein auf die Funktionskomponente zugreifen. Zudem ergibt sich ein einheitliches Verhalten der Softwarekomponente in allen benutzten Programmierwerkzeugen, der Testaufwand der Softwarekomponente sowie der Test der Integration in die Werkzeuge wird erheblich reduziert. Darüber hinaus erfolgt eine Fehlerbehebung, Änderungen, Erweiterungen etc. zentral in der Softwarekomponente, wovon alle Programmierwerkzeuge profitieren. Ein Datenaustausch, z.B. durch Kopieren in die Zwischenablage beispielsweise als Cut, Copy, Paste zwischen unterschiedlichen Programmierwerkzeugen ist automatisch oder zumindest mit geringem Aufwand möglich.

Eine Verlagerung allen darstellungsspezifischen Wissens einer Softwarekomponente in eine gemeinsame Komponente wird dadurch weiter gestützt, daß die Softwarekomponente Mittel zur Kapselung der darstellungsspezifischen Eigenschaften des Automatisierungsprogramms aufweist.

Eine einheitliche Benutzerführung kann dadurch sichergestellt werden, daß die Softwarekomponente Mittel zur selbsttätigen Durchführung vorgebbarer Vorgänge, insbesondere Drucken, Datenaustausch, Bedienung aufweist.

Eine Transparenz unabhängig vom jeweiligen Programmierwerkzeug kann dadurch erzielt werden, daß der Softwarekomponente Informationen zum Wechseln zwischen den der Softwarekomponente zugeordneten Darstellungsarten zugeordnet sind.

Ein vorteilhafter Anwendungsfall besteht darin, daß die Funktionsregeln der Softwarekomponente als boole'sche Ausdrücke ausgebildet sind.

Eine schneller und sicherer Zugriff auf die Funktionsregeln wird dadurch ermöglicht, daß die Funktionsregeln unabhängig vom jeweils verwendeten Programmierwerkzeug und/oder unabhängig von der Darstellungsart modifizierbar sind.

Eine sichere Plazierung und/oder Einbettung der Darstellungsarten in die unterschiedlichen Programmierwerkzeuge wird dadurch optimiert, daß die Softwarekomponente den Programmierwerkzeugen und/oder einer Automatisierungssoftware Daten hinsichtlich des für die graphische Darstellung erforderlichen Platzbedarfs übermittelt, so daß das Programmierwerkzeug und/ oder die Automatisierungssoftware in der Lage ist, die Darstellung der verbleibenden Komponenten entsprechend anzupassen.

Im folgenden wird die Erfindung anhand der in den Figuren dargestellten Ausführungsbeispielen näher beschrieben und erläutert.

Es zeigen:
- FIG 1: ein Blockschaltbild zum Grundaufbau einer Softwarekomponente und zu deren Einbettung in verschiedene Programmierwerkzeuge,
- FIG 2: eine schematische Darstellung eines Bildschirmfensters mit beispielhaften Softwarekomponenten und Darstellungsarten eines ersten Programmierwerkzeugs,
- FIG 3: eine schematische Darstellung eines Bildschirmfensters mit beispielhaften Softwarekomponenten und Darstellungsarten eines zweiten Programmierwerkzeugs und
- FIG 4: eine schematische Darstellung eines Bildschirmfensters mit beispielhaften Softwarekomponenten und Darstellungsarten eines dritten Programmierwerkzeugs.

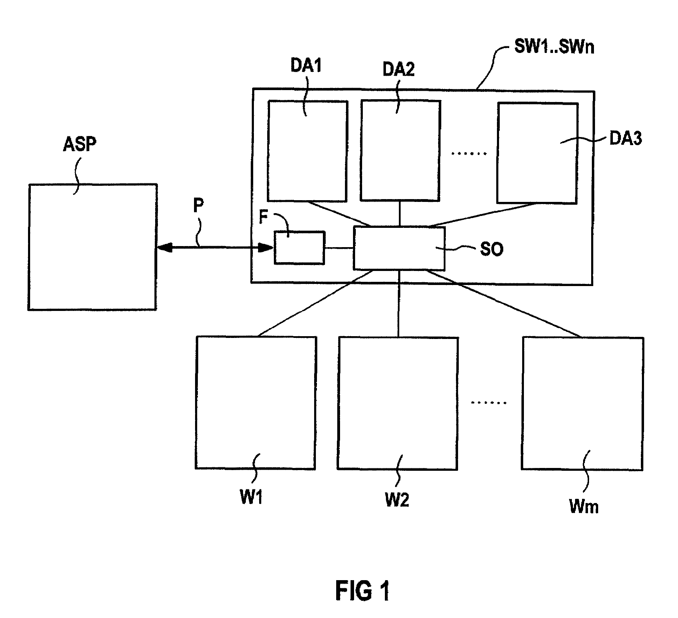

Figur 1 zeigt ein Blockschaltbild zum Grundaufbau einer Softwarekomponente SW1 und zu deren Einbettung in verschiedene Programmierwerkzeuge W1..Wm. Die Softwarekomponente SW1 steht als Repräsentant für den Grundaufbau einer Vielzahl von Softwarekomponenten SW1..SWn und wird im folgenden auch als Softwarekomponente SW bezeichnet. Die Softwarekomponente SW enthält ein zentrales Softwareobjekt SO, das die der Softwarekomponente SW zugeordneten Funktionsregeln verwaltet. Dem Softwareobjekt SO sind die Darstellungsarten DA1..DAm zugeordnet. Die Darstellungsarten DA1..DAm dienen der graphischen Darstellung der Funktionsregeln F innerhalb der Softwarekomponente SW in den verschiedenen Programmierwerkzeugen W1..Wz. Ein Programmierwerkzeug unterstützt dabei in der Regel mehrere Darstellungsarten. Das Softwareobjekt SO kapselt somit alle darstellungsspezifischen Eigenschaften der Funktionsregeln (also einem Bestandteil eines Automatisierungsprogramms ASP), was mit Hilfe eines Pfeiles P zwischen dem Automatisierungsprogramm ASP und den Funktionsregeln F veranschaulicht ist.

Das Automatisierungsprogramm ASP ist ein Programm zur Automatisierung eines technischen Prozesses, das beispielsweise festlegt, wie die Meßgrößen des Prozesses auf die Stellgrößen einwirken. Das Automatisierungsprogramm wird von verschiedenen Werkzeugen W1..Wz unter Zuhilfenahme der Softwarekomponente SW erstellt. Jede Softwarekomponente SW kapselt im Softwareobjekt SO die der Softwarekomponente SW zugeordneten Funktionsregeln F, während die Softwarekomponente verschiedene Darstellungsarten DA1..DAi aufweist. Durch die Kapselung der darstellungsspezifischen Eigenschaften der Softwarekomponente SW in dem Softwareobjekt verhält sich die Softwarekomponente in allen Werkzeugen W1..Wz im Bezug auf Repräsentation und Bedienung gleich. Beispielsweise weist eine Softwarekomponente drei Darstellungsarten DA1, DA2 und DA3 auf, wobei ein erstes Werkzeug W1 beispielsweise die Darstellungsarten DA1 und DA2 anbietet und ein zweites Werkzeug W2 beispielsweise die Darstellungsarten DA2 und DA3 anbietet. Durch die Realisierung der Softwarekomponente in der in der Figur 1 dargestellten Funktionsweise wird es möglich, auch innerhalb eines Werkzeugs W1..Wz zwischen den verschiedenen in der Softwarekomponente vorhandenen Darstellungsformen DA1..DAi zu wechseln. Ausführungsbeispiele für den Einsatz derartiger Softwarekomponenten sind beispielsweise:

Erstellung einer Komponente zur Bearbeitung von Bedingungen in Ablaufketten, wobei die Bedingungen beispielsweise in den Darstellungsarten Kontaktplan und Funktionsplan angezeigt werden können. Die Werkzeuge, in denen die Bedingungen erstellt, programmiert, verwendet und/oder dargestellt werden, sind Editoren zum Erstellen von Zustandsautomaten, von Ablaufketten, beispielsweise die Siemens-Werkzeuge S7-GRAPH, HiGraph, etc.

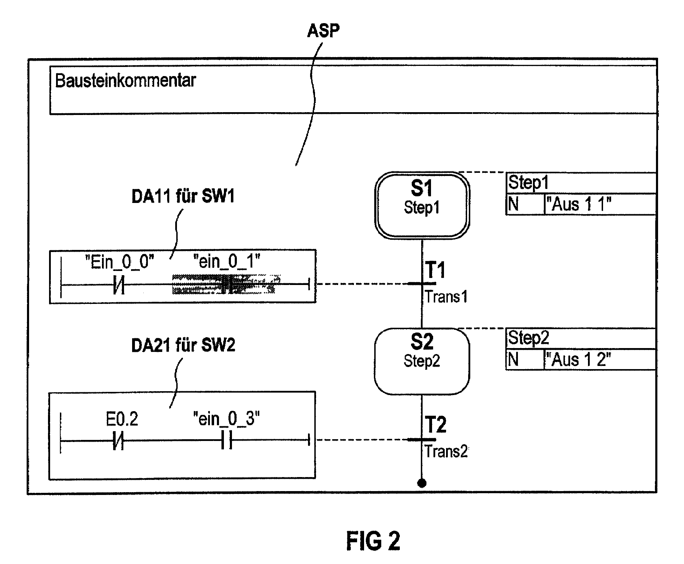

Figur 2 zeigt eine schematische Darstellung eines Bildschirmfensters mit beispielhaften Softwarekomponenten SW1, SW2 und den Darstellungsarten DA11, DA21 eines Programmierwerkzeugs, wobei die Darstellungsart "Kontaktplan" verwendet wird. Das Automatisierungsprogramm ASP enthält zwei Programmschritte S1 und S2 sowie jeweils zugeordnete Übergangsfunktionen T1 und T2. Den Übergangsfunktionen T1 und T2 sind Übergangsbedingungen zugeordnet, die in der Softwarekomponente SW1, SW2 jeweils zugeordneten Funktionsregeln enthalten sind. DA11 und DA21 zeigen die den Softwarekomponenten SW1 und SW2 jeweils zugeordnete Darstellungsart "Kontaktplan".

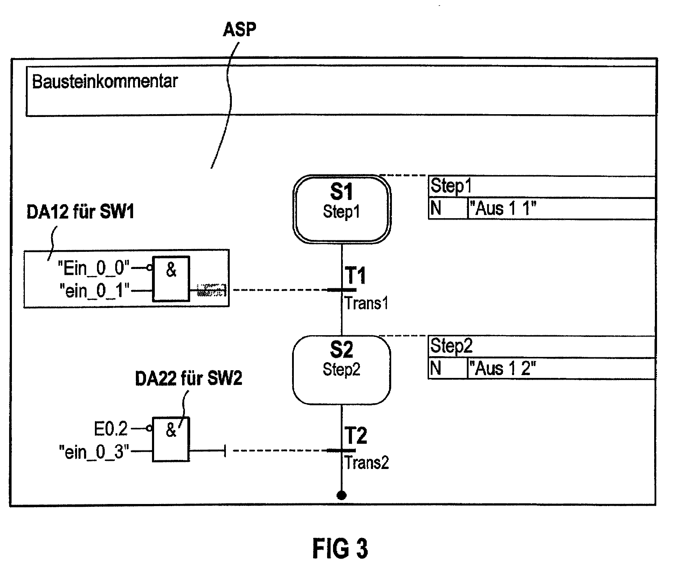

Figur 3 zeigt eine schematische Darstellung des in Figur 2 dargestellten Sachverhaltes in der Darstellungsart "Funktionsplan". Dabei werden im wesentlichen die bereits im Zusammenhang mit Figur 2 eingeführten Bezugszeichen verwendet, so daß zur Vermeidung von Wiederholungen hierauf verwiesen wird.

Der Benutzer kann, soweit entsprechende Darstellungsarten vorhanden sind, innerhalb eines Programmierwerkzeugs unter den unterschiedlichen Darstellungsarten wechseln, wobei jede Darstellungsart jeweils die selben Funktionsregeln darstellt. Auch ein Datenaustausch zwischen den unterschiedlichen Werkzeugen ist automatisch bzw. mit geringem Aufwand gegeben. Eine Änderung, Fehlerbehebung etc. einer Softwarekomponente SW1, SW2 erfolgt unabhängig von der Darstellungsart zentral in der Komponente, wovon somit alle Programmierwerkzeuge profitieren.

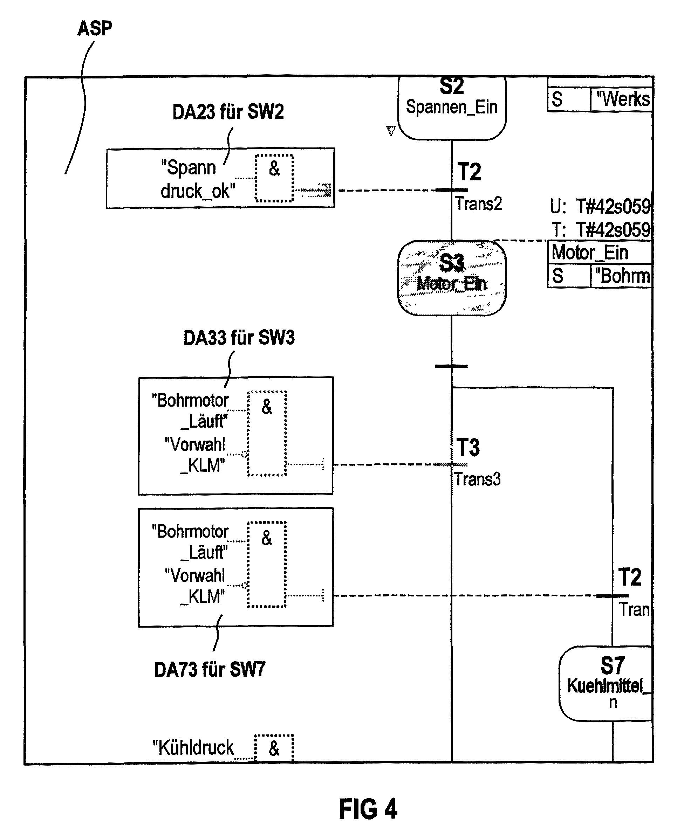

Figur 4 zeigt eine schematische Darstellung eines Bildschirmfensters mit beispielhaften Softwarekomponenten SW1, SW2 des Programmierwerkzeugs während der "Statusanzeige". Hierbei zeigt das Programmierwerkzeug den aktuellen Ausführungszustand des Automatisierungsprogramms an. Dabei sind wiederum zwei Zustandsübergänge T2, T3 dargestellt, denen jeweils Darstellungsarten DA23, DA33 zugeordnet sind.

Im folgenden werden verschiedenste Ausführungsbeispiele der Erfindung stichwortartig erläutert:
- Erstellung einer Komponente zur Bearbeitung von Bedingungen in Ablaufketten.
- Bedingungen werden in den Darstellungsarten KOP (Kontaktplan) und FUP (Funktionsplan) angezeigt.
- Die Werkzeuge, in dem die Bedingungen erstellt/programmiert/verwendet/dargestellt werden, sind grafische Editoren zum Erstellen von Zustandsautomaten, Ablaufketten, ... (Beispiel S7-GRAPH, HiGraph, ...)
- Die Bedingungsarten KOP und FUP werden durch eine Komponente (S7 Lupeneditor / S7LUX) implementiert.
- S7LUX realisiert die Anzeige, die Bearbeitung, den Ausdruck, die Erstellung und die Statusanzeige von Bedingungen. Das einbettende Werkzeug (S7-GRAPH, HiGraph, ...) weiß weder etwas von der Interpretation der Bedingungen, noch leistet es einen Beitrag dazu, die Bedingungen darzustellen.
- Für das einbettende Werkzeug ist es völlig transparent, ob die Bedingung in der Darstellungsform KOP oder in der Darstellungsform FUP angezeigt wird.
- Jede Instanz einer S7LUX Komponente repräsentiert genau eine Bedingung.
- Benötigt das Werkzeug mehr als eine Bedingung, müssen mehrere Instanzen der S7LUX Komponente verwendet werden.
- Jede S7LUX Instanz kommuniziert mit dem Werkzeug und handelt mit diesem den zur Darstellung benötigten/vorhandenen Platz aus.
- Die Bearbeitung der Bedingungen erfolgt **nur** über die S7LUX Komponente. Will das Werkzeug an der Bedingung etwas ändern, so wird dazu ein Befehl an der Schnittstelle der S7LUX Komponente verwendet.
- Die gerade aktive Darstellungsart (KOP, FUP) wird vom Werkzeug über einen Parameter der S7LUX Komponente festgelegt. Ob eine Darstellung in dieser Form erfolgen kann, und was dazu nötig ist, ist Aufgabe der S7LUX Komponente. Für das Werkzeug ist dies transparent.
- Für die Persistenz ist das Werkzeug zuständig. Es stellt den Inhalt den Komponenten beim Laden zur Verfügung und speichert diesen auch wieder ab.
- Soll der Inhalt des Werkzeugs gedruckt werden, so drucken sich die Komponenten in den vom Werkzeug zur Verfügung gestellten Raum selbst.

Zusammenfassend betrifft die Erfindung somit eine Softwarekomponente SW für ein Automatisierungsprogramm ASP mit einem Softwareobjekt SO zur Bearbeitung der der Softwarekomponente SW zugeordneten Funktionsregel F und insbesondere mit mehreren Darstellungsarten DAi zur graphischen Darstellung der in der Softwarekomponente SW enthaltenen Funktionsregeln F, wobei die Softwarekomponente SW Mittel M zur Auswahl einer Darstellungsart DAi der Funktionsregeln F der Softwarekomponente SW aufweist.

## Patentansprüche

1. Softwarekomponente (SW1..SWn) für ein Automatisierungsprogramm (ASP) mit mindestens einem Softwareobjekt (SO) zur Bearbeitung von der Softwarekomponente (SW1..SWn) zugeordneten Funktionsregeln (Fi) und mit insbesondere mehreren graphischen Darstellungsarten (DAj) zur graphischen Darstellung der Softwarekomponente(n) (SW1..SWn) in verschiedenen Programmierwerkzeugen (W1..Wm), wobei Darstellungsarten (Dai) in der Softwarekomponente (SW1..SWn) gekapselt sind und wobei die Softwarekomponente (SW1..SWn) Mittel zur Auswahl einer der Funktionsregeln (Fi) der Softwarekomponente (SW1..SWn) aufweist.

2. Softwarekomponente nach Anspruch 1,
**dadurch gekennzeichnet,**
daß die Softwarekomponente (SW1..SWn) Mittel zur selbsttätigen Durchführung vorgebbarer Vorgänge, insbesondere Drucken, Datenaustausch, Bedienung aufweist.

3. Softwarekomponente nach einem der Ansprüche 1 oder 2,
**dadurch gekennzeichnet,**
daß die Softwarekomponente (SW1..SWn) Informationen zum Wechseln zwischen den der Softwarekomponente (SW1..SWn) zugeordneten Darstellungsarten (Daj) zugeordnet sind.

4. Softwarekomponente nach einem der Ansprüche 1 bis 3,
**dadurch gekennzeichnet,**
daß die Funktionsregeln (Fi) der Softwarekomponente (SW1..SWn) als boole'sche Ausdrücke ausgebildet sind.

5. Softwarekomponente nach einem der Ansprüche 1 bis 4,
**dadurch gekennzeichnet,**
daß die Funktionsregeln (Fi) unabhängig vom jeweils verwendeten Programmierwerkzeug und/oder unabhängig von der Art der Darstellungsart modifizierbar sind.

6. Softwarekomponente nach einem der Ansprüche 1 bis 5,
**dadurch gekennzeichnet,**
daß die Softwarekomponente (SW 1..SWn) den Programmierwerkzeugen und/oder einer Automatisierungssoftware Daten hinsichtlich des für die graphische Darstellung erforderlichen Platzbedarfs übermittelt, so daß das Programmierwerkzeug (W1..Wm) in der Lage ist, die Darstellung der verbleibenden Komponenten entsprechend anzupassen.

7. System zur Erstellung, Steuerung und/oder Überwachung eines technischen Prozesses mit mindestens einer Softwarekomponente (SW1..SWn), die mindestens ein Softwareobjekt (SO) zur Bearbeitung von der Softwarekomponente (SW1..SWn) zugeordneten Funktionsregeln (Fi) und mit Darstellungsarten (DAi) zur graphischen Darstellung der Softwarekomponente (SW1, SW2) in verschiedenen Programmierwerkzeugen (W1..Wn) aufweist, wobei die Softwarekomponente (SW1..SWn) Mittel zur Kapselung der graphischen Darstellungsarten (DAj) aufweist.

8. Verfahren zur Erstellung, Steuerung und/oder Überwachung eines technischen Prozesses, bei dem einer Softwarekomponente (SW) des technischen Prozesses Funktionsregeln (Fi) zugeordnet sind, bei dem der Softwarekomponente (SW) Darstellungsarten (DAi) zur graphischen Darstellung der Softwarekomponente (SW) in verschiedenen Programmierwerkzeugen (W1..Wn) zugeordnet sind, bei dem die Darstellungsarten (DAi) mit den zugeordneten Funktionsregeln (Fi) jeweils unabhängig von den Programmierwerkzeugen (W1..Wm) wirksam sind.

9. Verfahren nach Anspruch 8,
**dadurch gekennzeichnet,**
daß in der Softwarekomponente (SW) sämtliche darstellungsspezifischen Eigenschaften der Softwarekomponente (SW) gekapselt sind.

10. Verfahren nach einem der Ansprüche 8 oder 9,
**dadurch gekennzeichnet,**
daß für die Darstellungsarten (DAi) jeweils einheitliche Schnittstellen vorgesehen sind.
